# EUROPEAN PATENT SPECIFICATION

(11) **EP 3 647 847 B1**
(45) Date of publication and mention of the grant of the patent: **13.12.2023**
(21) Application number: 19839088.2
(22) Date of filing: 31.07.2019
(51) Int. Cl.: G02B 6/44, C08L 23/08, C08K 3/04, C08K 3/22, C08K 3/32, G02B 6/52

(54) **FLAME-RETARDANT AIR JETTED MICRO-CABLE**
FLAMMHEMMENDES LUFTSTRAHL-MIKROKABEL
MICROCÂBLE À JET D'AIR IGNIFUGE

(30) Priority: 07.08.2018 CN 201810892061
(43) Date of publication of application: 06.05.2020
(73) Proprietor: Hengtong Optic-Electric Co., Ltd., Suzhou, Jiangsu 215234 (CN)
(72) Inventor: WANG, Rui, Suzhou, Jiangsu 215234 (CN); LI, Wei, Suzhou, Jiangsu 215234 (CN); ZHOU, Feng, Suzhou, Jiangsu 215234 (CN); FEI, Huaqing, Suzhou, Jiangsu 215234 (CN); ZHANG, Xiaoshan, Suzhou, Jiangsu 215234 (CN); SHI, Huiping, Suzhou, Jiangsu 215234 (CN); WANG, Yuliang, Suzhou, Jiangsu 215234 (CN); LIU, Peidong, Suzhou, Jiangsu 215234 (CN); WU, Di, Suzhou, Jiangsu 215234 (CN); HAN, Yufeng, Suzhou, Jiangsu 215234 (CN)
(74) Representative: Bergenstråhle & Partners AB
(86) International application number: PCT/CN2019/098726
(87) International publication number: WO 2020/029856

(56) References cited:
- EP-A2- 2 360 699
- CN-A- 101 702 049
- CN-A- 104 893 088
- CN-A- 106 590 006
- CN-A- 107 177 086
- CN-A- 107 765 384
- CN-A- 108 017 826
- CN-A- 108 957 661
- CN-U- 204 882 964
- JP-A- S59 182 404

## Description

The present disclosure relates to the field of communications, in particular to a flame retardant air-blown microcable.

With the increasing network coverage density of communication operators, optical cables are arranged densely day by day. Pipeline air-blown microcables are laid for most indoor connections, but the optical cables usually in turn are direct causes of fire disasters, leading to quick expansion and spreading of fire disasters, and damaging costly electronic instrument and devices, thus affecting normal operation of the whole circuit and even causing paralysis. A lot of smoke generated in combustion threatens people's safety, therefore, various major manufacturers are researching and developing flame retardant air-blown microcables with high flame retardance, a low smoke quantity, a low heat release value, and a low acid degree, but in practical processes, quite satisfactory effects still have not been achieved. Generally, there are problems that the flame retardant effect is relatively good, but when preparing optical cable jackets, a big molding thickness cannot ensure mechanical performances, while some formulas capable of preparing a small thickness have poor flame retardant effects.

CN 204882964 U discloses a dielectric airblowing microcable comprising an aramid layer surrounding a cable core and an outer protective polyethylene cover of dimethylsilicone polymer.

CN 108017826 A discloses a cable sheeting material comprising a flame-retardent polymethylene sheeting material comprising a flame-retardent polyethylene sheeting material.

CN 107177086 A discloses a cable jacket material, especially a kind of red-and-and proof cracking resistance flame-proof cable sheath material belonging to the field of cable technology.

EP 2 360 699 A1 discloses a clean flame retardend composition with carbo nano tube for enhancing mechanical properties for insulation of a wire and cable.

A technical problem to be solved by the present disclosure is to provide a flame retardant air-blown microcable, which has a small preparation thickness, effectively ensures mechanical performances, and has good flame retardant performance, ensuring excellent performances of the optical cable such as meeting requirement of category C bunched combustion, high light transmittance, and a low acid value.

The above problem is solved according to the present invention by a flame retardant air-blown microcable according to claim 1. Beneficial aspects are subject of the subclaims.

In one or more embodiments, the flame retardant is inorganic metal hydroxide; for example, the flame retardant is one or more selected from the group consisting of aluminum sodium hydroxide and aluminum hydroxide; in one or more embodiments, the flame retardant is inorganic magnesium hydroxide.

The outer sheath has a thickness of 0.7-1.3 mm; for example, the outer sheath has a thickness of 0.7-1.0 mm; for instance, the outer sheath has a thickness of 1 mm.

In one or more embodiments, the outer sheath includes following components in parts by weight: 50-55 parts of ethylene-vinyl acetate copolymer EVA, 40-45 parts of linear low-density polyethylene LLDPE, 45-55 parts of flame retardant, 8-9 parts of synergistic flame retardant, 8-11 parts of plasticizer, 1-3 parts of lubricant, 1-2 parts of coupling agent, 1-2 parts of compatilizer, 1-2 parts of antioxidant, 2-2.5 parts of carbon black, and 1-1.5 parts of amide slipping agent.

In one or more embodiments, the outer sheath includes following components in parts by weight: 55 parts of the ethylene-vinyl acetate copolymer EVA, 45 parts of linear low-density polyethylene LLDPE, 55 parts of flame retardant, 9 parts of synergistic flame retardant, 11 parts of plasticizer, 3 parts of lubricant, 2 parts of coupling agent, 2 parts of compatilizer, 2 parts of antioxidant, 2 parts of carbon black, and 1 part of amide slipping agent.

In one or more embodiments, the cable paste includes following components in parts by weight: 70-88 parts of base oil, 20-25 parts of methyl silicone oil, 2-4 parts of gelatinizing agent, 3-5 parts of antioxidant, 5-9 parts of hydrogen getter, 3-9 parts of boron nitride, 6-15 parts of silicone, 8-16 parts of fluorosilicone-monomer-modified elastic acrylic emulsion and 15-18 parts of nano ATO aqueous slurry.

In one or more embodiments, the cable paste includes following components in parts by weight: 70-80 parts of base oil, 20-23 parts of methyl silicone oil, 2-3 parts of gelatinizing agent, 3-4 parts of antioxidant, 5-8 parts of hydrogen getter, 3-6 parts of boron nitride, 6-12 parts of silicone, 8-15 parts of fluorosilicone-monomer-modified elastic acrylic emulsion and 15-16 parts of nano ATO aqueous slurry.

In one or more embodiments, the cable paste includes following components in parts by weight: 80 parts of base oil, 23 parts of methyl silicone oil, 3 parts of gelatinizing agent, 4 parts of antioxidant, 8 parts of hydrogen getter, 6 parts of boron nitride, 12 parts of silicone, 15 parts of fluorosilicone-monomer-modified elastic acrylic emulsion and 16 parts of nano ATO aqueous slurry.

In one or more embodiments, on the outer surface of the stranded loose tube an armor layer is further clad, wherein the outer sheath is clad on an outer surface of the armor layer, a surface of the armor layer located at one side of the outer sheath is provided with a plurality of support ribs arranged along an axial direction of the armor layer, a filling cavity is formed through cooperation of two adjacent support ribs and the surface of the armor layer, and a flame retardant gel is provided inside the filling cavity.

In one or more embodiments, a shielding layer is further provided between the outer sheath and the armor layer, wherein the shielding layer is woven by zinc-plated steel wires, with a weaving density of no less than 90%.

In one or more embodiments, on an inner wall of the loose tube four V-shape recesses are provided, the V-shape recesses are provided along an axial direction, the four V-shape recesses are arranged to cooperate pairwise, the inner wall of the loose tube between two V-shape recesses is provided as an easy-to-pull strip, two easy-to-pull strips are provide opposite, and the surface of the loose tube corresponding to the easy-to-pull strip is cut to have breaking indentations.

The present disclosure further provides a method for preparing a flame retardant air-blown microcable, produced using a mold core and a mold sleeve through a secondary coating process.

The present disclosure further provides use of the above flame retardant air-blown microcable in metropolitan area network, access network and fiber to the home.

The present disclosure has following beneficial effects.

The flame retardant air-blown microcable innovatively adopts the outer sheath made of the new high-performance, low-smoke, halogen-free material, such that a finished optical cable has good mechanical performances, low-friction performance of the outer surface of the optical cable ensures good air-blowing effect, thus providing a solution to optical cable pipeline connection, and improving a utilization ratio of pipeline resources. Besides, when a fire disaster is happening, the high-performance, low-smoke, halogen-free outer sheath material allows the optical cable to have a small quantity of smoke generated, a low heat release value, a low acid value, with a low spreading rate of fire disaster, which is environment-friendly and safe, and contributes to multi-network integration.

### Brief Description of Drawings

FIG. 1 is an overall structural schematic diagram of the present disclosure;
FIG. 2 is a schematic diagram of a cross-section portion of a loose tube of the present disclosure; and
FIG. 3 is a schematic diagram of a surface of the loose tube of the present disclosure.

### Detailed Description of Embodiments

The present disclosure is further described below in combination with accompanying drawings and embodiments, such that a person skilled in the art could understand the present disclosure in a better way and implement the present disclosure, but the embodiments illustrated are not limitation on the present disclosure.

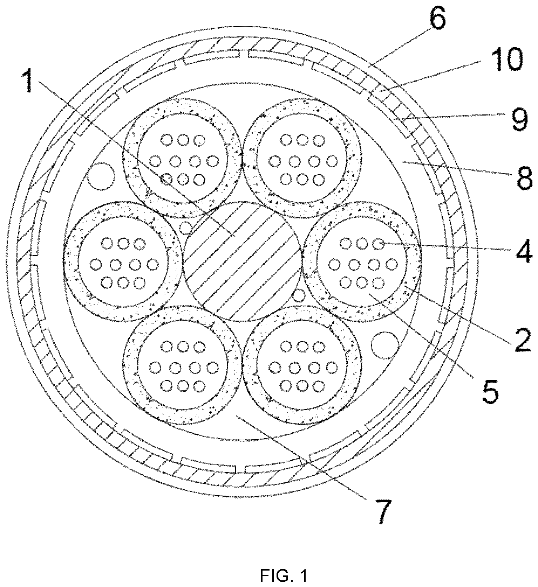

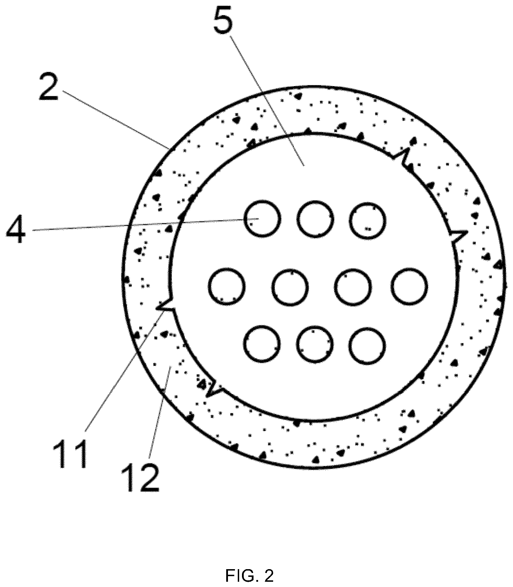

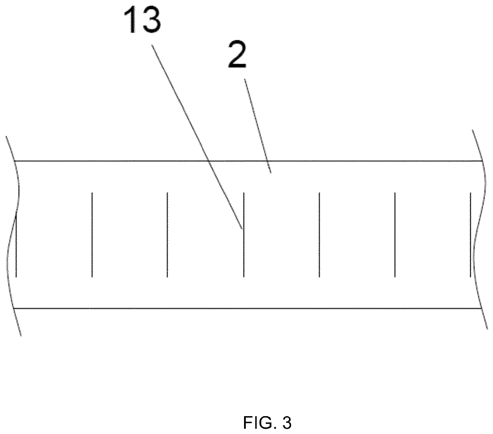

Referring to what is shown in FIG. 1 to FIG. 3, a flame retardant air-blown microcable in an embodiment of the present disclosure includes a central reinforcement member 1, loose tubes 2 are stranded on an outer surface of the central reinforcement member, an optical fiber unit 4 and a first water blocking substance 5 are provided in the loose tube, wherein the optical fiber unit is an optical fiber bundle, the first water blocking substance is a water-blocking fiber paste, an outer sheath 6 is clad on an outer surface of the stranded loose tube, and the outer sheath is further filled therein with a cable paste 7.

Different from conventional air-blown microcable products, the flame retardant air-blown microcable newly developed in the present disclosure, using a low-smoke, halogen-free, low-friction outer sheath material, not only allows the optical cable to have good air-blowing performance, wherein more than 1 KM can be air-blown once, ensuring mechanical performances of the optical cable, but also endows the optical cable with good flame retardant performance, and guarantees excellent performances of the optical cable such as meeting requirement of category C bunched combustion, high light transmittance, and a low acid value.

What is the most important for the flame retardant air-blown microcable is protection of the outer sheath. The outer sheath contacts a combustion source first, therefore, a new high-performance, low-smoke, halogen-free material needs to be used for the outer sheath. A formula provided in the present disclosure can allow a finished optical cable to have good mechanical performances, low-friction performance of an outer surface of the optical cable ensures good air-blown effect, thus providing a solution to optical cable pipeline connection, and improving a utilization ratio of pipeline resources. Besides, when a fire disaster is happening, the high-performance, low-smoke, halogen-free outer sheath material allows the optical cable to have a small quantity of smoke generated, a low heat release value, a low acid value, with a low spreading rate of fire disaster, which is environment-friendly and safe, and contributes to multi-network integration.

The formula of the present disclosure adopts inorganic magnesium hydroxide as a flame retardant, and ammonium polyphosphate as a synergistic flame retardant, ensuring that the sheath material meets requirement of category C bunched combustion, and has high light transmittance, a low acid value, and a reduced surface friction coefficient. Specific formula components are as follows: the outer sheath includes following components in parts by weight: 55 parts of ethylene-vinyl acetate copolymer EVA, 45 parts of linear low-density polyethylene LLDPE, 55 parts of flame retardant, 9 parts of synergistic flame retardant, 11 parts of plasticizer, 3 parts of lubricant, 2 parts of coupling agent, 2 parts of compatilizer, 2 parts of antioxidant, 2 parts of carbon black, and 1 part of amide slipping agent.

In production, a secondary coating manufacturing process is adopted for the flame retardant air-blown microcable. By using a mold core and a mold sleeve, an outer diameter and a wall thickness of the loose tube are reduced, facilitating the laying of the air-blown microcable in a better way. Meanwhile, a production speed is controlled to ensure appearance and quality of the loose tube, at the same time, it also can be guaranteed that an excess length of the optical fiber inside can be precisely controlled, such that the optical fiber inside is superior to common optical fibers in transmission performance.

When SZ stranding is needed, a stranding operation can be carried out.

Subsequently, the outer sheath is prepared. The flame retardant air-blown microcable not only ensures the air-blowing performance, but also guarantees the flame retardant performance, then the thickness of the outer sheath is minimized in the precondition of assuring the flame retardant performance of the optical cable. The outer sheath formed with the above formula can have a thickness of 0.7-1.3 mm. The wall thickness of the outer sheath is precisely controlled, at the same time, an evacuating device is adopted, a stripe depth on the outer surface of the optical cable is precisely controlled to be 0.2±0.1 mm, ensuring that airflow can generate a maximum pushing force on the surface of the optical cable so as to assure the air-blowing performance, and reduce the production and maintenance costs of the optical fiber.

The flame retardant air-blown microcable, with use of the novel low-smoke, halogen-free material and precise process control, not only can achieve relatively high rigidity, tenacity and air-blowing performance the common microcables cannot achieve, but also realize characteristics such as high density, small cable diameter, and light weight of optical fiber packing required by laying optical cables in an air-blowing manner. A non-metal structure used can effectively prevent lightning stroke and strong electricity. A specially designed compact optical cable structure thereof can effectively prevent the sheath from retracting, and the high-flame-retardant, low-smoke, halogen-free outer sheath material can sufficiently ensure a small quantity of smoke generated, low heat release and a low acid value of the optical cable, with a low spreading rate of fire disaster, moreover, the production and later maintenance costs of the optical cable are reduced, therefore, it is the best option for the air-blowing laying manner, effectively solving the problems of high cost, highly difficult construction, and poor expansion and upgrading capabilities of current common optical cables.

In an embodiment, the outer sheath includes following components in parts by weight: 50 parts of ethylene-vinyl acetate copolymer EVA, 40 parts of linear low-density polyethylene LLDPE, 45 parts of flame retardant, 8 parts of synergistic flame retardant, 8 parts of plasticizer, 1 part of lubricant, 1 part of coupling agent, 1 part of compatilizer, 1 part of antioxidant, 2 parts of carbon black, and 1 part of amide slipping agent.

In an embodiment, the outer sheath includes following components in parts by weight: 60 parts of ethylene-vinyl acetate copolymer EVA, 50 parts of linear low-density polyethylene LLDPE, 60 parts of flame retardant, 12 parts of synergistic flame retardant, 12 parts of plasticizer, 4 parts of lubricant, 4 parts of coupling agent, 3 parts of compatilizer, 3 parts of antioxidant, 3 parts of carbon black, and 2 part of amide slipping agent.

In multiple embodiments above, the flame retardant is inorganic magnesium hydroxide, and the synergistic flame retardant is ammonium polyphosphate, greatly improving the flame retardant effect.

In order to improve the high-temperature resistant effect, the cable paste includes following components in parts by weight: 80 parts of base oil, 23 parts of methyl silicone oil, 3 parts of gelatinizing agent, 4 parts of antioxidant, 8 parts of hydrogen getter, 6 parts of boron nitride, 12 parts of silicone, 15 parts of fluorosilicone-monomer-modified elastic acrylic emulsion and 16 parts of nano ATO aqueous slurry. This cable paste formula has good heat insulation effect in a high-temperature environment, and a low self heat conduction efficiency, effectively protecting the optical fiber inside, and further has good elasticity in use, overall structural stability, and a small expansion coefficient, so as to ensure overall reliability of the optical cable.

In an embodiment, the cable paste includes following components in parts by weight: 88 parts of base oil, 25 parts of methyl silicone oil, 4 parts of gelatinizing agent, 5 parts of antioxidant, 9 parts of hydrogen getter, 9 parts of boron nitride, 15 parts of silicone, 16 parts of fluorosilicone-monomer-modified elastic acrylic emulsion and 18 parts of nano ATO aqueous slurry.

In an embodiment, the cable paste includes following components in parts by weight: 70 parts of base oil, 20 parts of methyl silicone oil, 2 parts of gelatinizing agent, 3 parts of antioxidant, 5 parts of hydrogen getter, 3 parts of boron nitride, 6 parts of silicone, 8 parts of fluorosilicone-monomer-modified elastic acrylic emulsion and 15 parts of nano ATO aqueous slurry.

On an outer surface of the stranded loose tube an armor layer 8 is further clad, wherein the outer sheath is clad on an outer surface of the armor layer, a surface of the armor layer located at one side of the outer sheath is provided with a plurality of support ribs arranged along an axial direction of the armor layer, a filling cavity is formed through cooperation of two adjacent support ribs and the surface of the armor layer, and a flame retardant gel 9 is provided inside the filling cavity. The armor layer and the outer sheath cooperate to form two-layer protective effect; the support ribs can abut against the outer sheath, and when the outer sheath is extruded to mold, the support ribs will form certain fused integration with the outer sheath due to a high temperature, achieving better connection effect. Moreover, the filling cavity formed by two adjacent support ribs also can effectively retain the flame retardant gel, avoiding damage to the flame retardant gel in high-temperature preparation. The flame retardant gel can delay the combustion time, and also has certain effect of blocking open fire, moreover, and there is only a small quantity of smoke after combustion, effectively ensuring the flame retardant effect of the optical cable.

A shielding layer 10 is further provided between the outer sheath and the armor layer, wherein the shielding layer is woven by zinc-plated steel wires, with a weaving density of no less than 90%. The shielding layer can block open fire, effectively protect signal transmission of the optical cable against interference, and effectively retain the flame retardant gel within the filing cavity, then the manufacturing is more convenient and fast, and the optical cable further can have improved bending performance, and is not easily damaged.

As the optical fiber needs to be drawn out when the optical cable is connected, and the optical fiber will be damaged if a stripping tool is used, on an inner wall of the loose tube four V-shape recesses 11 are provided, wherein the V-shape recesses are provided along an axial direction, the four V-shape recesses are arranged to cooperate pairwise, the inner wall of the loose tube between two V-shape recesses is provided as an easy-to-pull strip 12, wherein two easy-to-pull strips are provide opposite, and the surface of the loose tube corresponding to the easy-to-pull strip is cut to have breaking indentations 13. When stripping out the optical fiber, it only needs to pull the easy-to-pull strip, and as the V-shape recesses are provided at two sides of the easy-to-pull strip on the inner wall, the easy-to-pull strip and the loose tube body can be easily separated, and the V-shape recesses serve a guiding effect for breaking; after a long enough length is stripped, the breaking indentations on the easy-to-pull strip enables the separated easy-to-pull strip to be quickly pulled apart through the breaking indentations, preventing the non-separated easy-to-pull strip from being pulled to be separated from the loose tube body.

The above embodiments are merely preferred embodiments illustrated for fully explaining the present disclosure, while the scope of protection of the present disclosure is not limited thereto. The scope of protection of the present disclosure is determined by the claims.

### Industrial Applicability:

The flame retardant air-blown microcable innovatively adopts the outer sheath made of the new high-performance, low-smoke, halogen-free material, such that the finished optical cable has good mechanical performances, the low-friction performance of the outer surface of the optical cable ensures good air-blowing effect, thus providing a solution to optical cable pipeline connection, and improving a utilization ratio of pipeline resources. Besides, when a fire disaster is happening, the high-performance, low-smoke, halogen-free outer sheath material allows the optical cable to have a small quantity of smoke generated, a low heat release value, a low acid value, with a low spreading rate of fire disaster, which is environment-friendly and safe, and contributes to multi-network integration.

## Claims

1. Aflame retardant air-blown microcable, comprising a central reinforcement member (1), wherein a loose tube (2) is stranded on an outer surface of the central reinforcement member (1), an optical fiber unit (4) and a first water blocking substance (5) are provided in the loose tube (2), wherein the optical fiber unit (4) is an optical fiber bundle, the first water blocking substance (5) is a water-blocking fiber paste, an outer sheath (6) is clad on an outer surface of the stranded loose tube (2), and the outer sheath (6) is further filled therein with a cable paste (7), **characterized in that** the outer sheath (6) comprises following components in parts by weight: 50-60 parts of ethylene-vinyl acetate copolymer EVA, 40-50 parts of linear low-density polyethylene LLDPE, 45-60 parts of flame retardant, 8-12 parts of synergistic flame retardant, 8-12 parts of plasticizer, 1-4 parts of lubricant, 1-4 parts of coupling agent, 1-3 parts of compatilizer, 1-3 parts of antioxidant, 2-3 parts of carbon black, and 1-2 parts of amide slipping agent and wherein the outer sheath (6) has a thickness of 0.7-1.3 mm,
wherein the synergistic flame retardant is ammonium polyphosphate.

2. The flame retardant air-blown microcable according to claim 1, wherein the flame retardant is inorganic metal hydroxide.

3. The flame retardant air-blown microcable according to claim 2, wherein the flame retardant is one or more selected from the group consisting of aluminum sodium hydroxide and aluminum hydroxide.

4. The flame retardant air-blown microcable according to claim 1 or 2, wherein the flame retardant is inorganic magnesium hydroxide.

5. The flame retardant air-blown microcable according to any one of claims 1-4, wherein the outer sheath (6) has a thickness of 0.7-1.0 mm; and preferably, the outer sheath (6) has a thickness of 1.0 mm.

6. The flame retardant air-blown microcable according to any one of claims 1-5, wherein the outer sheath (6) comprises following components in parts by weight: 50-55 parts of ethylene-vinyl acetate copolymer EVA, 40-45 parts of linear low-density polyethylene LLDPE, 45-55 parts of flame retardant, 8-9 parts of synergistic flame retardant, 8-11 parts of plasticizer, 1-3 parts of lubricant, 1-2 parts of coupling agent, 1-2 parts of compatilizer, 1-2 parts of antioxidant, 2-2.5 parts of carbon black, and 1-1.5 parts of amide slipping agent.

7. The flame retardant air-blown microcable according to claim 6, wherein the outer sheath (6) comprises following components in parts by weight: 55 parts of the ethylene-vinyl acetate copolymer EVA, 45 parts of the linear low-density polyethylene LLDPE, 55 parts of the flame retardant, 9 parts of the synergistic flame retardant, 11 parts of the plasticizer, 3 parts of the lubricant, 2 parts of the coupling agent, 2 parts of the compatilizer, 2 parts of the antioxidant, 2 parts of the carbon black, and 1 part of the amide slipping agent.

8. The flame retardant air-blown microcable according to any one of claims 1-7, wherein the cable paste (7) comprises following components in parts by weight: 70-88 parts of base oil, 20-25 parts of methyl silicone oil, 2-4 parts of gelatinizing agent, 3-5 parts of antioxidant, 5-9 parts of hydrogen getter, 3-9 parts of boron nitride, 6-15 parts of silicone, 8-16 parts of fluorosilicone-monomer-modified elastic acrylic emulsion and 15-18 parts of nano ATO aqueous slurry.

9. The flame retardant air-blown microcable according to claim 8, wherein the cable paste (7) comprises following components in parts by weight: 70-80 parts of the base oil, 20-23 parts of the methyl silicone oil, 2-3 parts of the gelatinizing agent, 3-4 parts of the antioxidant, 5-8 parts of the hydrogen getter, 3-6 parts of the boron nitride, 6-12 parts of the silicone, 8-15 parts of the fluorosilicone-monomer-modified elastic acrylic emulsion and 15-16 parts of the nano ATO aqueous slurry.

10. The flame retardant air-blown microcable according to claim 9, wherein the cable paste (7) comprises following components in parts by weight: 80 parts of the base oil, 23 parts of the methyl silicone oil, 3 parts of the gelatinizing agent, 4 parts of the antioxidant, 8 parts of the hydrogen getter, 6 parts of the boron nitride, 12 parts of the silicone, 15 parts of the fluorosilicone-monomer-modified elastic acrylic emulsion and 16 parts of the nano ATO aqueous slurry.

11. The flame retardant air-blown microcable according to any one of claims 1-10, wherein an armor layer (8) is further clad on the outer surface of the stranded loose tube (2), wherein the outer sheath (6) is clad on an outer surface of the armor layer (8), a surface of the armor layer (8) located at one side of the outer sheath (6) is provided with a plurality of support ribs arranged along an axial direction of the armor layer (8), a filling cavity is formed through cooperation of two adjacent support ribs and the surface of the armor layer (8), and a flame retardant gel (9) is provided inside the filling cavity.

12. The flame retardant air-blown microcable according to claim 11, wherein a shielding layer (10) is further provided between the outer sheath (6) and the armor layer (8), wherein the shielding layer (10) is woven by zinc-plated steel wires, with a weaving density of no less than 90%.

13. The flame retardant air-blown microcable according to claim 11 or 12, wherein four V-shape recesses (11) are provided on an inner wall of the loose tube (2), the V-shape recesses (11) are provided along an axial direction, the four V-shape recesses (11) are arranged to cooperate pairwise, the inner wall of the loose tube (2) between two of the V-shape recesses (11) is provided as an easy-to-pull strip (12), two easy-to-pull strips (12) are provide opposite, and the surface of the loose tube (2) corresponding to the easy-to-pull strip (12) is cut to have breaking indentations (13).

14. A method for preparing the flame retardant air-blown microcable according to any one of claims 1-13, produced using a mold core and a mold sleeve through a secondary coating process.

## Patentansprüche

1. Flammhemmendes Luftstrahl-Mikrokabel, umfassend ein zentrales Verstärkungselement (1), wobei eine Hohlader (2) an einer äußeren Oberfläche des zentralen Verstärkungselements (1) verseilt ist, eine Glasfasereinheit (4) und eine erste wasserblockierend Substanz (5) in der Hohlader (2) bereitgestellt sind, wobei die Glasfasereinheit (4) ein Glasfaserbündel ist, die erste wasserblockierend Substanz (5) eine wasserblockierende Faserpaste ist, eine äußere Oberfläche der verseilten Hohlader (2) mit einem Außenmantel (6) verkleidet ist und der Außenmantel (6) darin ferner mit einer Kabelpaste (7) gefüllt ist, **dadurch gekennzeichnet, dass** der Außenmantel (6) folgende Komponenten in Gewichtsteilen umfasst: 50-60 Teile Ethylen-Vinylacetat-Copolymer EVA, 40-50 Teile lineares Polyethylen von geringer Dichte LLDPE, 45-60 Teile Flammschutzmittel, 8-12 Teile synergistisches Flammschutzmittel, 8-12 Teile Weichmacher, 1-4 Teile Schmiermittel, 1-4 Teile Haftvermittler, 1-3 Teile Verträglichkeitsvermittler, 1-3 Teile Antioxidans, 2-3 Teile Ruß und 1-2 Teile Amid-Gleitmittel, und wobei der Außenmantel (6) eine Dicke von 0,7-1,3 mm aufweist,
wobei das synergistische Flammschutzmittel Ammoniumpolyphosphat ist.

2. Flammhemmendes Luftstrahl-Mikrokabel nach Anspruch 1, wobei das Flammschutzmittel anorganisches Metallhydroxid ist.

3. Flammhemmendes Luftstrahl-Mikrokabel nach Anspruch 2, wobei es sich bei dem Flammschutzmittel um eines oder mehrere handelt, die ausgewählt sind aus der Gruppe bestehend aus Aluminiumnatriumhydroxid und Aluminiumhydroxid.

4. Flammhemmendes Luftstrahl-Mikrokabel nach Anspruch 1 oder 2, wobei das Flammschutzmittel anorganisches Magnesiumhydroxid ist.

5. Flammhemmendes Luftstrahl-Mikrokabel nach einem der Ansprüche 1-4, wobei der Außenmantel (6) eine Dicke von 0,7-1,0 mm aufweist; und vorzugsweise der Außenmantel (6) eine Dicke von 1,0 mm aufweist.

6. Flammhemmendes Luftstrahl-Mikrokabel nach einem der Ansprüche 1-5, wobei der Außenmantel (6) folgende Komponenten in Gewichtsteilen umfasst: 50-55 Teile Ethylen-Vinylacetat-Copolymer EVA, 40-45 Teile lineares Polyethylen von geringer Dichte LLDPE, 45-55 Teile Flammschutzmittel, 8-9 Teile synergistisches Flammschutzmittel, 8-11 Teile Weichmacher, 1-3 Teile Schmiermittel, 1-2 Teile Haftvermittler, 1-2 Teile Verträglichkeitsvermittler, 1-2 Teile Antioxidans, 2-2,5 Teile Ruß und 1-1,5 Teile Amid-Gleitmittel.

7. Flammhemmendes Luftstrahl-Mikrokabel nach Anspruch 6, wobei der Außenmantel (6) folgende Komponenten in Gewichtsteilen umfasst: 55 Teile Ethylen-Vinylacetat-Copolymer EVA, 45 Teile lineares Polyethylen von geringer Dichte LLDPE, 55 Teile Flammschutzmittel, 9 Teile synergistisches Flammschutzmittel, 11 Teile Weichmacher, 3 Teile Schmiermittel, 2 Teile Haftvermittler, 2 Teile Verträglichkeitsvermittler, 2 Teile Antioxidans, 2 Teile Ruß und 1 Teil Amid-Gleitmittel.

8. Flammhemmendes Luftstrahl-Mikrokabel nach einem der Ansprüche 1-7, wobei die Kabelpaste (7) folgende Komponenten in Gewichtsteilen umfasst: 70-88 Teile Basisöl, 20-25 Teile Methylsilikonöl, 2-4 Teile Geliermittel, 3-5 Teile Antioxidans, 5-9 Teile Wasserstoffgetter, 3-9 Teile Bornitrid, 6-15 Teile Silikon, 8-16 Teile mit Fluorsilikonmonomer modifizierte elastische Acrylemulsion und 15-18 Teile wässrige Nano-ATO-Aufschlämmung.

9. Flammhemmendes Luftstrahl-Mikrokabel nach Anspruch 8, wobei die Kabelpaste (7) folgende Komponenten in Gewichtsteilen umfasst: 70-80 Teile Basisöl, 20-23 Teile Methylsilikonöl, 2-3 Teile Geliermittel, 3-4 Teile Antioxidans, 5-8 Teile Wasserstoffgetter, 3-6 Teile Bornitrid, 6-12 Teile Silikon, 8-15 Teile mit Fluorsilikonmonomer modifizierte elastische Acrylemulsion und 15-16 Teile wässrige Nano-ATO-Aufschlämmung.

10. Flammhemmendes Luftstrahl-Mikrokabel nach Anspruch 9, wobei die Kabelpaste (7) folgende Komponenten in Gewichtsteilen umfasst: 80 Teile Basisöl, 23 Teile Methylsilikonöl, 3 Teile Geliermittel, 4 Teile Antioxidans, 8 Teile Wasserstoffgetter, 6 Teile Bornitrid, 12 Teile Silikon, 15 Teile mit Fluorsilikonmonomer modifizierte elastische Acrylemulsion und 16 Teile wässrige Nano-ATO-Aufschlämmung.

11. Flammhemmendes Luftstrahl-Mikrokabel nach einem der Ansprüche 1-10, wobei die äußere Oberfläche der verseilten Hohlader (2) ferner mit einer Bewehrungschicht (8) verkleidet ist, wobei eine äußere Oberfläche der Bewehrungschicht (8) mit einem Außenmantel (6) verkleidet ist, eine Oberfläche der Bewehrungschicht (8), die sich auf einer Seite des Außenmantels (6) befindet, mit einer Mehrzahl von Stützrippen versehen ist, die entlang einer axialen Richtung der Bewehrungschicht (8) angeordnet sind, ein Füllhohlraum durch das Zusammenwirken von zwei benachbarten Stützrippen und der Oberfläche der Bewehrungschicht (8) gebildet wird und ein flammhemmendes Gel (9) innerhalb des Füllhohlraums bereitgestellt ist.

12. Flammhemmendes Luftstrahl-Mikrokabel nach Anspruch 11, wobei eine Abschirmschicht (10) ferner zwischen dem Außenmantel (6) und der Bewehrungschicht (8) bereitgestellt ist, wobei die Abschirmschicht (10) durch zinkplattierte Stahldrähte mit einer Webdichte von mindestens 90 % gewebt ist.

13. Flammhemmendes Luftstrahl-Mikrokabel nach Anspruch 11 oder 12, wobei vier V-förmige Aussparungen (11) an einer Innenwand der Hohlader (2) bereitgestellt sind, die V-förmigen Aussparungen (11) entlang einer axialen Richtung bereitgestellt sind, die vier V-förmigen Aussparungen (11) so angeordnet sind, dass sie paarweise zusammenwirken, die Innenwand der Hohlader (2) zwischen zwei der V-förmigen Aussparungen (11) als leicht abziehbarer Streifen (12) bereitgestellt sind, zwei leicht abziehbare Streifen (12) gegenüber bereitgestellt sind und die Oberfläche der Hohlader (2), die dem leicht abziehbaren Streifen (12) entspricht, so eingeschnitten ist, dass sie unterbrechende Einschnitte (13) aufweist.

14. Verfahren zum Herstellen des flammhemmenden Luftstrahl-Mikrokabels nach einem der Ansprüche 1-13, hergestellt unter Verwendung eines Formkerns und einer Formhülle durch einen sekundären Beschichtungsprozess.

## Revendications

1. Microcâble à jet d'air à agent ignifugeant, comprenant un élément de renforcement central (1), un tube lâche (2) étant bloqué sur une surface extérieure de l'élément de renforcement central (1), une unité de fibres optiques (4) et une première substance bloquant l'eau (5) étant placées dans le tube lâche (2), l'unité de fibres optiques (4) étant un faisceau de fibres optiques, la première substance bloquant l'eau (5) étant une pâte de fibres bloquant l'eau, une gaine extérieure (6) étant revêtue sur une surface extérieure du tube lâche bloqué (2), et la gaine extérieure (6) étant en outre remplie dans celle-ci avec une pâte de câble (7), **caractérisé en ce que** la gaine extérieure (6) comprend les composants suivants en parties en poids : 50 à 60 parties de copolymère d'éthylène-acétate de vinyle EVA, 40 à 50 parties de polyéthylène basse densité linéaire LLDPE, 45 à 60 parties d'agent ignifugeant, 8 à 12 parties d'agent ignifugeant synergiste, 8 à 12 parties de plastifiant, 1 à 4 parties de lubrifiant, 1 à 4 parties d'agent de couplage, 1 à 3 parties d'agent compatibilisant, 1 à 3 parties d'antioxydant, 2 à 3 parties de noir de carbone et 1 à 2 parties d'agent glissant de type amide et la gaine extérieure (6) possédant une épaisseur de 0,7 à 1,3 mm,
l'agent ignifugeant synergiste étant le polyphosphate d'ammonium.

2. Microcâble à jet d'air à agent ignifugeant selon la revendication 1, l'agent ignifugeant étant un hydroxyde métallique inorganique.

3. Microcâble à jet d'air à agent ignifugeant selon la revendication 2, l'agent ignifugeant étant l'un ou plusieurs choisis dans le groupe constitué par l'hydroxyde de sodium et d'aluminium et l'hydroxyde d'aluminium.

4. Microcâble à jet d'air à agent ignifugeant selon la revendication 1 ou 2, l'agent ignifugeant étant un hydroxyde de magnésium inorganique.

5. Microcâble à jet d'air à agent ignifugeant selon l'une quelconque des revendications 1 à 4, la gaine extérieure (6) ayant une épaisseur de 0,7 à 1,0 mm ; et préférablement, la gaine extérieure (6) ayant une épaisseur de 1,0 mm.

6. Microcâble à jet d'air à agent ignifugeant selon l'une quelconque des revendications 1 à 5, la gaine extérieure (6) comprenant les composants suivants en parties en poids : 50 à 55 parties de copolymère d'éthylène-acétate de vinyle EVA, 40 à 45 parties de polyéthylène basse densité linéaire LLDPE, 45 à 55 parties d'agent ignifugeant, 8 à 9 parties d'agent ignifugeant synergiste, 8 à 11 parties de plastifiant, 1 à 3 parties de lubrifiant, 1 à 2 parties d'agent de couplage, 1 à 2 parties d'agent compatibilisant, 1 à 2 parties d'antioxydant, 2 à 2,5 parties de noir de carbone et 1 à 1,5 partie d'agent glissant de type amide.

7. Microcâble à jet d'air à agent ignifugeant selon la revendication 6, la gaine extérieure (6) comprenant les composants suivants en parties en poids : 55 parties de copolymère d'éthylène-acétate de vinyle EVA, 45 parties de polyéthylène basse densité linéaire LLDPE, 55 parties d'agent ignifugeant, 9 parties d'agent ignifugeant synergiste, 11 parties de plastifiant, 3 parties de lubrifiant, 2 parties d'agent de couplage, 2 parties d'agent compatibilisant, 2 parties d'antioxydant, 2 parties de noir de carbone et 1 partie d'agent glissant de type amide.

8. Microcâble à jet d'air à agent ignifugeant selon l'une quelconque des revendications 1 à 7, la pâte de câble (7) comprenant les composants suivants en parties en poids : 70 à 88 parties d'huile de base, 20 à 25 parties d'huile de méthylsilicone, 2 à 4 parties d'agent gélatinisant, 3 à 5 parties d'antioxydant, 5 à 9 parties de getter d'hydrogène, 3 à 9 parties du nitrure de bore, 6 à 15 parties de la silicone, 8 à 16 parties de l'émulsion d'acrylique élastique modifié par un monomère de fluorosilicone et 15 à 18 parties de la suspension aqueuse de nano ATO.

9. Microcâble à jet d'air à agent ignifugeant selon la revendication 8, la pâte de câble (7) comprenant les composants suivants en parties en poids : 70 à 80 parties d'huile de base, 20 à 23 parties d'huile de méthylsilicone, 2 à 3 parties d'agent gélatinisant, 3 à 4 parties d'antioxydant, 5 à 8 parties de getter d'hydrogène, 3 à 6 parties du nitrure de bore, 6 à 12 parties de la silicone, 8 à 15 parties de l'émulsion d'acrylique élastique modifié par un monomère de fluorosilicone et 15 à 16 parties de la suspension aqueuse de nano ATO.

10. Microcâble à jet d'air à agent ignifugeant selon la revendication 9, la pâte de câble (7) comprenant les composants suivants en parties en poids : 80 parties d'huile de base, 23 parties d'huile de méthylsilicone, 3 parties d'agent gélatinisant, 4 parties d'antioxydant, 8 parties de getter d'hydrogène, 6 parties du nitrure de bore, 12 parties de la silicone, 15 parties de l'émulsion d'acrylique élastique modifié par un monomère de fluorosilicone et 16 parties de la suspension aqueuse de nano ATO.

11. Microcâble à jet d'air à agent ignifugeant selon l'une quelconque des revendications 1 à 10, une couche d'armure (8) étant en outre revêtue sur la surface extérieure du tube lâche bloqué (2), la gaine extérieure (6) étant revêtue sur une surface extérieure de la couche d'armure (8), une surface de la couche d'armure (8) située au niveau d'un côté de la gaine extérieure (6) étant pourvue d'une pluralité de nervures de support agencées le long d'une direction axiale de la couche d'armure (8), une cavité de remplissage étant formée par coopération de deux nervures de support adjacentes et de la surface de la couche d'armure (8), et un gel d'agent ignifugeant (9) étant placé à l'intérieur de la cavité de remplissage.

12. Microcâble à jet d'air à agent ignifugeant selon la revendication 11, une couche de blindage (10) étant en outre placée entre la gaine extérieure (6) et la couche d'armure (8), la couche de blindage (10) étant tissée par des fils d'acier plaqués par du zinc, avec une densité de tissage de pas moins de 90 %.

13. Microcâble à jet d'air à agent ignifugeant selon la revendication 11 ou 12, quatre évidements en forme de V (11) étant placés sur une paroi intérieure du tube lâche (2), les évidements en forme de V (11) étant placés le long d'une direction axiale, les quatre évidements en forme de V (11) étant agencés pour coopérer par paires, la paroi intérieure du tube lâche (2) entre deux des évidements en forme de V (11) étant fournie en tant que bande facile à tirer (12), deux bandes faciles à tirer (12) étant placées à l'opposé, et la surface du tube lâche (2) correspondant à la bande facile à tirer (12) étant découpée pour avoir des indentations de rupture (13) .

14. Procédé pour la préparation du microcâble à jet d'air à agent ignifugeant selon l'une quelconque des revendications 1 à 13, produit en utilisant un noyau de moule et un manchon de moule par le biais d'un processus de revêtement secondaire.
